# EUROPEAN PATENT APPLICATION

(11) **EP 1 674 425 A1**
(43) Date of publication of application: **28.06.2006**
(21) Application number: 05111258.9
(22) Date of filing: 24.11.2005
(51) Int. Cl.: C01B 7/19

(54) **Process for the purification of gaseous hydrogen fluoride**

(30) Priority: 21.12.2004 GB 0427968
(71) Applicant: Davy Process Technology (Switzerland) AG, 4133 Pratteln 1 (CH)
(72) Inventor: Leuzinger, Roland, CH-4133 Pratteln-1 (CH); Braun, Perikles, CH-4133 Pratteln-1 (CH)
(74) Representative: Smaggasgale, Gillian Helen

(57) **Abstract**

A process for the purification of an impure gaseous hydrogen fluoride stream, said stream comprising hydrogen fluoride and phosphorous impurities, and being substantially free of sulphuric acid, the process comprising: (a) absorbing (2) the impure gaseous stream into an aqueous acid solution to form a liquid stream; (b) introducing the liquid stream to a distillation column (6) for distillation to form an overhead stream of hydrogen fluoride having a lower phosphorous content than the impure stream and a bottoms stream comprising aqueous acid and impurities.

## Description

The present invention relates to a process for the production of hydrogen fluoride (HF). More particularly, it relates to a process for purifying a hydrogen fluoride stream comprising impurities such as phosphorous compounds to yield essentially pure hydrogen fluoride. The product is generally anhydrous.

Hydrogen fluoride is generally produced from the mineral fluorspar which comprises CaF₂ One suitable process for producing hydrogen fluoride from fluorspar is described in Kirk-Othmer's Encyclopedia of Chemical Technology (3rd edition 1980, pages 743 to 746). In this process the fluorspar is treated with sulphuric acid in a rotary kiln. A hot gaseous stream comprising hydrogen fluoride and sulphuric acid is recovered from the kiln and subjected to scrubbing to condense and remove the sulphuric acid. In this scrubbing stage, which is often known as pre-purifying or pre-condensing, the stream from the kiln is generally fed to a packed column operated at atmospheric pressure where it is contacted with a counter-current stream of sulphuric acid to cool the stream and condense and remove the sulphuric acid content.

The scrubbed stream will essentially comprise hydrogen fluoride but will also include various impurities, the quantity and identity of which will depend on the quality of the fluorspar used.

Although various impurities may be present, one of the most common impurities are phosphorous compounds. Generally, and herein, although various phosphorous compounds may be present, the amount of phosphorous present is described in terms of P₂O₅ content. The concentrations are given as weight percent (wt%) or weight ppm (wppm).

Since hydrogen fluoride containing these impurities has disadvantages when used as a reactant in downstream processes, various suggestions have been made with a view to reducing the impurity content in the hydrogen fluoride stream. "Technical-grade" hydrogen fluoride produced by conventional processes will generally have a phosphorous content of about 5 to 10 wppm. This impurity level can be obtained using commercial grades of fluorspar and standard purification processes. However, there is a demand for improved purification processes which are energetically efficient purification and/or which enable "technical-grade" impurity levels to be achieved starting from lower grade fluorspar.

Still further suggestions are described in US 6346227 in which after pre-treatment by distillation/oxidation, a two-stage scrub is carried out using 65 to 90% strength by weight hydrofluoric acid and 90 to 100% strength by weight hydrofluoric acid and water is fed into the first circuit and a corresponding amount of hydrofluoric acid is bled off to remove impurities. The oxidation pre-treatment is carried out using an oxidising agent such as fluorine.

In US 3553938 a process for separating and recovering hydrogen fluoride is described in which a gaseous mixture containing hydrogen fluoride and impurities is contacted with at least one of absorptive liquids to absorb the hydrogen fluoride into the absorptive liquid. The hydrogen fluoride is then recovered by heating the resulting absorptive liquid under evaporation. Suitable absorptive liquids include phosphoric acid, poly-phosphoric acid, fluoride-phosphoric acid or mixtures thereof. However, this process does not remove phosphorous impurities.

Various processes are available and various proposals have been made with a view to reducing the impurity content, particularly the phosphorous impurity content, to the desired level. Most common, and as described in Kirk-Othmer's Encyclopedia of Chemical Technology (3rd edition 1980, pages 743 to 746) and in US 3725536 is a process involving multiple stage condensation and distillation. As noted in Kirk-Othmer, the energy requirements for these types of processes are of the order of 1.5 GJ - 10°C refrigeration per ton HF which is a significant factor in the production costs.

In US 3167391 a process is described in which the gas produced by the reaction of sulphuric acid with fluorspar is absorbed in an absorber unit in an acid solution to liquefy the sulphuric acid and the hydrogen fluoride. The hydrogen fluoride stream is then selectively evaporated from the acid solution. The remaining liquid, which has a reduced content of dissolved hydrogen fluoride is cooled and recirculated to the absorber as absorbant. The gaseous stream from the reboiler, which includes hydrogen fluoride and phosphorous impurities is scrubbed with a reflux stream in a distillation column with controlled addition of regulated quantities of water to specific plates or sections of the column to remove the phosphorous compounds from the gaseous phase and retain them in the liquid phase.

Whilst this process does go some way towards producing the desired level of purity, it requires careful control of the water addition to the distillation column and therefore can be complex, and costly, to operate.

An alternative process is described in US 3166379 in which the hydrogen fluoride is contacted with an oxidising agent to remove the impurities as high boiling compounds.

A different approach to the problem is described in US 4078047 in which a reactive iron compound is added to the fluorspar. This has the effect of reducing the phosphorous in the hydrogen fluoride stream from the rotary kiln.

Whilst these processes go some way to addressing the problems there is a demand for improved processes. In particular, while known processes may provide acceptable commercial grade hydrogen fluoride from low phosphorous content fluorspars the availability of such fluorspars is reducing and thus its price is increasing. It is therefore desirable to be able to provide processes which can handle the higher levels of phosphorous which will be present in the stream from the kiln when lower grade fluorspar is used as starting material. Where low grade fluorspar is used, such as those having about 5000 ppm P₂O₅ the stream from the rotary kiln will have in the region of 1000 to 4000 wppm phosphorous.

It is therefore desirable to provide a process which can handle a higher impurity content. Whilst the processes described in US 3166379 and US 3167391 could be run with a view to handling higher phosphorous content the addition of additives or water is costly and complex. Other alternatives are the well known operations such as those described in Kirk-Othmer and in US 3725536 which require the use of multiple energy intensive low temperature condensation and distillation stages. Processes of this type require significant capital investment and have higher operating costs. If these multiple stages are used, the P₂O₅ content may be reduced to less than 10 ppm. However, in addition to the cost implications of operating such systems, a further disadvantage is that significant amounts of hydrogen fluoride are lost in these processes.

Thus is will be understood that fluorspar having a content of about 5000 wppm P₂O₅ can presently only be used in commercial processes with high cooling costs or involving costly and complex additives. Simpler, less complex processes will not be able to handle the very high impurity levels which will be present when it becomes necessary to use even lower grade fluorspar.

It is therefore desirable to provide a process which will enable the higher quantity of impurities present in hydrogen fluoride produced from low grade fluorspar to be removed in an efficient and cost-effective manner. Additionally or alternatively it is desirable to provide a process for removing phosphorous impurities from a hydrogen fluoride stream produced from conventional fluorspar which will enable the desired level of purity to be achieved in an efficient and cost-effective manner. In particular, it is desirable to provide a process which utilises less energy and preferably cheaper energy.

Thus according to the present invention there is provided a process for the purification of an impure gaseous hydrogen fluoride stream, said stream comprising hydrogen fluoride and phosphorous impurities and being substantially free of sulphuric acid, the process comprising:
(a) absorbing the impure gaseous stream into an aqueous acid solution to form a liquid stream;
(b) introducing the liquid stream to a distillation column for distillation to form an overhead stream of hydrogen fluoride having a lower phosphorous content than the impure stream and a bottoms stream comprising aqueous acid and impurities.

By "impure gaseous hydrogen fluoride stream" we mean any gaseous stream from a process for the production of hydrogen fluoride such as, but not limited to, that produced by reaction of fluorspar with sulphuric acid and from which the sulphuric acid has been substantially removed by scrubbing by conventional means. The impurities in the stream will include phosphorous but other impurities may be present. The level of phosphorous present will depend on the quality of the starting material in the reaction for the production of hydrogen fluoride. It will generally be in the region of from 200 to 4000 wppm. However, it is believed that the process of the present invention will be equally applicable to the higher levels of phosphorous impurities.

By "substantially free of sulphuric acid" we mean that the stream is free of sulphuric acid or minor amounts such as from about 10 to 150 wppm may remain.

The product stream will preferably be anhydrous.

The product stream will have a reduced level of impurity from the starting material. In one arrangement it will be reduced to a level of 10 wppm P₂O₅ or less.

In a preferred arrangement of the present invention, the aqueous acid solution comprises an aqueous hydrogen fluoride solution. In one arrangement the solution comprises hydrogen fluoride and water at a ratio of from about 4:6 to about 19:1. In a more preferred arrangement, the aqueous acid solution comprises hydrogen fluoride and water at a ration of from about 7:3 to about 4: 1. Without wishing to be bound by any theory, it is believed that the presence of this level of water promotes the formation of phosphorous compounds which have a higher boiling point than hydrogen fluoride, such as H₂PO₃F, such that when the acid solution is distilled, the gaseous hydrogen fluoride can readily be removed from the acid solution by distillation, the gaseous phase being essentially free of the non-volatile phosphorous impurities.

The absorption of the hydrogen fluoride gas into the aqueous acid solution may be carried out in any suitable liquid/gas contacting apparatus. In one arrangement, the absorption takes place in an absorption column such as a packed column or a tray column. Any suitable conditions may be used. However, in one arrangement of the present invention the absorption may be carried out at ambient temperature or above. In a preferred arrangement, the temperature is in the region of from about 40°C to about 60°C. A particular benefit of operating at these temperatures is that it is not necessary to use chilled absorber liquids thereby reducing the high costs of refrigeration of such liquids which are noted with prior art processes.

The distillation column may be of any suitable arrangement but will typically comprise a stripping and rectification section.

In one arrangement of the present invention, the bottoms stream from the distillation column, which may be at a concentration at, or near to, the azeotrope, will be recycled to the absorption stage. A bleed may be included at any suitable place in the system to prevent the build-up of impurities in the system. The bleed stream may be recycled to the reactor for the production of hydrogen fluoride from fluorspar. Depending on the water content and the impurity content of the impure gaseous hydrogen fluoride stream, a small amount of water can be fed to the system to compensate for any water lost in the bleed stream.

The distillation column may be operated at increased pressure. Any suitable pressure may be used but pressures in the region of from about 1.1 to about 13 bar absolute offers certain advantages. For example, cooling water may be used in the head condenser rather than the need to use chilled water which is required by prior art processes and which adds to the energy costs of the system.

Thus the present invention offers certain advantages over the prior art. The ability not to have to use large amounts of refrigeration energy has financial advantages. The ability not to have to add water in a complex expensive way offers operational advantages. By retaining sufficient water, 10% or more, in the system the phosphorous compounds are retained in the liquid phase and are therefore in the hydrated, i.e. high boiling form.

The process may be a batch process or a continuous process with a continuous process being particularly preferred. The continuous addition of liquid aqueous hydrogen fluoride stream from the absorber to the distillation column preferably to a point in the distillation column above a stripping section and below a rectifying section means that in the unlikely event that any of the phosphorous becomes volatilized in the column it will be scrubbed out by the incoming stream which performs as a high water content scrubbing liquid.

The present invention will now be described, by way of example with reference to the accompanying drawing in which:

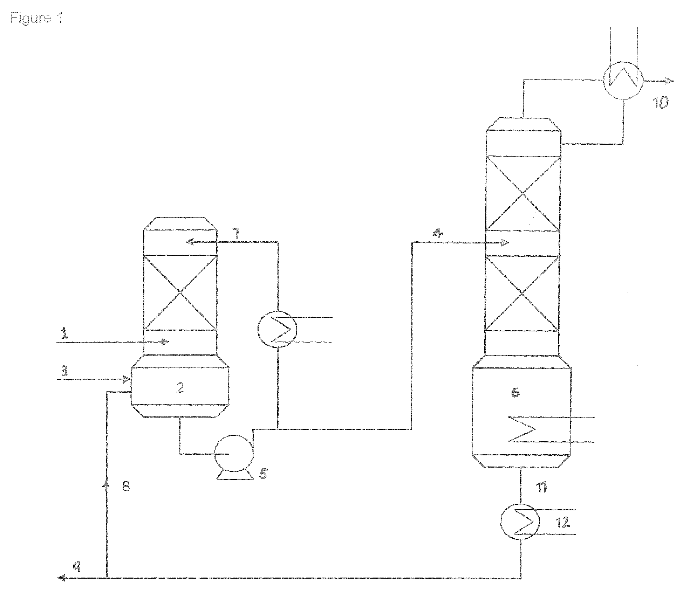

- Figure 1: is a schematic diagram of a process in accordance with the present invention.

It will be understood by those skilled in the art that the drawings are diagrammatic and that further items of equipment such as reflux drums, pumps, vacuum pumps, compressors, sensors, pressure relief valves, control valves, flow controllers, holding tanks, storage tanks and the like may be required in a commercial plant. The provision of such ancillary equipment forms no part of the present invention and is in accordance with conventional chemical engineering practice.

A gaseous product stream from a rotary kiln (not shown) used for the production of hydrogen fluoride from fluorspar is passed through a conventional scrubbing process to remove sulphuric acid (not shown). This impure stream which comprises hydrogen fluoride and phosphorous impurities is passed in line 1 to a packed column 2, where it is contacted with a cooled liquid stream, supplied in line 7, of aqueous hydrogen fluoride containing from 10 to 40% water to cool and condense it and to convert the phosphorous compounds present to high boiling compounds such as H₂PO₃F.

The liquid formed in the column is passed in line 4 using a pump 5 to the distillation column 6 with integrated reboiler in the sump and head condenser. A portion of the stream may be separated from line 4, cooled and returned in line 7 to the top of the column 2. In column 6 gaseous hydrogen fluoride is separated from the aqueous phase and removed from the column 6 as a gaseous overhead in line 10. The bottoms liquid stream including the phosphorous impurities are removed in line 11, cooled in cooler 12 and recycled in line 8 to the absorber 2. A bleed 9 may be removed from line 8, and make-up water, may be introduced in line 3.

The present invention will now be described with reference to the following example.

### Example 1

Fluorspar containing 0.5% P₂O₅ was fed to a rotary kiln together with sulphuric acid and a gaseous hydrogen fluoride stream containing sulphuric acid, phosphorous and other impurities was produced. The stream was passed through a pre-purifying scrubber which produced an impure gaseous hydrogen fluoride stream containing 0.1% H₂SO₄ and 0,4% P₂O₅. The impure gaseous hydrogen fluoride stream was passed to a packed tower where it was contacted counter-currently with a cooled aqueous hydrogen fluoride solution at 45°C. Almost all of the gaseous components were condensed in this packed tower, the resultant liquid having a composition of 72% hydrogen fluoride, 25% water, 1% H₂SO₄ and 2% P₂O₅. This liquid stream was pumped to the distillation column which was operated at 3 bar. The column was operated at a head temperature of 65°C and a reflux ratio of 2, a purity of 99.99% hydrogen fluoride was achieved. The remainder of the overhead comprised 0.01 % water and no more than 0.001% P₂O₅. The reboiler was operated at 120°C and a ratio of 1. The bottoms stream comprised 39% hydrogen fluoride, 55 wt% water, 1.5 wt% sulphuric acid and 4.5 wt% P₂O₅. The bottom stream was recycled to the absorber column with a small amount being removed in the bleed stream to avoid an excessive build-up of impurities in the system.

## Claims

1. A process for the purification of an impure gaseous hydrogen fluoride stream, said stream comprising hydrogen fluoride and phosphorous impurities, and being substantially free of sulphuric acid, the process comprising:
(a) absorbing the impure gaseous stream into an aqueous acid solution to form a liquid stream;
(b) introducing the liquid stream to a distillation column for distillation to form an overhead stream of hydrogen fluoride having a lower phosphorous content than the impure stream and a bottoms stream comprising aqueous acid and impurities.

2. A process according to Claim 1 wherein the aqueous acid solution comprises an aqueous hydrogen fluoride solution.

3. A process according to Claim 2 wherein the aqueous hydrogen fluoride solution comprises hydrogen fluoride and water at a ratio of from about 4:6 to about 19:1.

4. A process according to Claim 2 wherein the aqueous hydrogen fluoride solution comprises hydrogen fluoride and water at a ratio of from about 7:3 to about 4:1

5. A process according to any one of Claims 1 to 4 wherein the absorption is carried out at ambient temperature or above.

6. A process according to any one of Claims 1 to 5 wherein the absorption is carried out at a temperature of from about 40°C to about 60°C.

7. A process according to any one of Claims 1 to 6 wherein the bottoms stream from the distillation column will be recycled to the absorption stage.

8. A process according Claim 7 wherein a bleed is included.

9. A process according to any one of Claims 1 to 8 wherein the distillation column is operated at increased pressure.

10. A process according to Claim 9 wherein the pressure is from about 1.1 to about 13 bar absolute.

11. A process according to any one of Claims 1 to 10 wherein the process is continuous.

12. A process according to any one of Claims 1 to 10 wherein the process is a batch process.

13. A process according to any one of Claims 1 to 12 wherein the stream liquid stream introduced into the distillation column above the stripping section and below a rectifying section.
